# EUROPÄISCHE PATENTSCHRIFT

(11) **EP 3 341 282 B1**
(45) Veröffentlichungstag und Bekanntmachung des Hinweises auf die Patenterteilung: **15.05.2024**
(21) Anmeldenummer: 16758086.9
(22) Anmeldetag: 28.07.2016
(51) Int. Cl.: B63B 21/66, B66D 1/30, B65H 75/14, B65H 75/42, G01V 1/38, H01Q 1/34

(54) **TROMMEL FÜR EINE SCHLEPPANTENNE WINDE FÜR EINE SCHLEPPANTENNE SCHLEPPANTENNE ZUM SCHLEPPEN IM WASSER UND SCHIFF ZUM SCHLEPPEN EINER SCHLEPPANTENNE IM WASSER**
DRUM FOR A TOWED-ANTENNA WINCH FOR A TOWED ANTENNA, TOWED ANTENNA FOR TOWING IN WATER, AND SHIP FOR TOWING A TOWED ANTENNA IN WATER
TAMBOUR POUR ANTENNE REMORQUÉE, TREUIL POUR ANTENNE REMORQUÉE, ANTENNE REMORQUÉE DESTINÉE À ÊTRE REMORQUÉE DANS L'EAU ET NAVIRE POUR REMORQUER UNE ANTENNE REMORQUÉE DANS L'EAU

(30) Priorität: 28.08.2015 DE 102015114375
(43) Veröffentlichungstag der Anmeldung: 04.07.2018
(73) Patentinhaber: ATLAS ELEKTRONIK GmbH, 28309 Bremen (DE)
(72) Erfinder: WÜRKER, Sascha, 28355 Bremen (DE)
(74) Vertreter: thyssenkrupp Intellectual Property GmbH
(86) Internationale Anmeldenummer: PCT/DE2016/100345
(87) Internationale Veröffentlichungsnummer: WO 2017/036442

(56) Entgegenhaltungen:
- WO-A1-2004/039666
- WO-A1-2010/097426
- WO-A1-2014/026817
- DE-A1-102013 105 593
- GB-A- 2 517 756
- KR-A- 20120 076 844
- US-A1- 2008 267 009
- US-B1- 9 001 623

## Beschreibung

Die Erfindung betrifft eine Trommel für eine Schleppantenne mit einem Antrieb, wobei die Trommel eine erste Schleppantenne aufweist und der Trommel eine zweite Trommel mit einer zweiten Schleppantenne zuordenbar ist. Des Weiteren betrifft die Erfindung eine Winde für eine Schleppantenne, eine Schleppantenne zum Schleppen im Wasser und ein Schiff zum Schleppen einer Schleppantenne im Wasser.

Schleppantennen und/oder Schleppsonare werden üblicherweise zur seismischen Vermessung des Meeresgrundes oder zur Ortung von Gegenständen und Wasserfahrzeugen unter Wasser eingesetzt. Hierzu wird die Schleppantenne oder das Schleppsonar von einem Schleppfahrzeug getaucht durch das Wasser an einem Zugkabel gezogen.

Zum Ausbringen und Einholen der Schleppantenne oder des Schleppsonars wird eine Verbringvorrichtung üblicherweise am Deck eines Wasserfahrzeuges verwendet. Als Verbringvorrichtung wird beispielsweise eine Winde eingesetzt. Da die Schleppantenne als akustischer Empfangsteil empfindlich gegenüber Krümmungen und Quetschungen ist, ist die Windentrommel üblicherweise speziell an die Anforderungen der Schleppantenne und/oder des Zugkabels angepasst. Damit einher geht der Nachteil, dass herkömmliche Winden nicht nachrüstbar und/oder an eine andere Schleppantenne adaptierbar sind.

Üblicherweise wird für einen Schiffstyp immer eine spezielle vorausgelegte Schleppantenne mit zugehörigem oder einschließenden Zugkabel mit gleicher Länge und gleichen Durchmesser verwendet und die darauf abgestimmte Verbringvorrichtung ist fest an Bord installiert. Ein Umbau der Verbringvorrichtung findet üblicherweise nicht statt und ist generell nicht vorgesehen.

Deshalb ist bei an Bord installierten Verbringvorrichtungen nachteilig, dass die Länge und/oder der Durchmesser der Schleppantenne und/oder des Zugkabels nicht kurzfristig variiert werden können und/oder mehrere Schleppantennen und/oder Zugkabel mit unterschiedlichen Längen und/oder Durchmessern auf einer Verbringvorrichtung verwendet werden können.

Zudem ist ein Hauptnachteil, dass Schleppantennen und/oder Zugkabel immer in einer vorausgelegten Länge bereitgestellt werden.

US 9 001 623 B1 offenbart Sonarsysteme und Sonarverfahren, die einen Schleppkörper mit einem geschleppten akustischen Strahler verwenden, dessen Ausrichtung während des Schleppens geändert werden kann.

US 2008/0267009 A1 offenbart Handhabungs- und Lagersysteme für geophysikalische Ausrüstung in Containern und Methoden zu ihrer Verwendung.

DE 10 2013 105 593 A1 offenbart eine Verbringvorrichtung und ein Verfahren zum Ausbringen und Einholen eines Schleppsonars.

WO 2010/097426 A1 offenbart ein Verfahren und eine Vorrichtung zur Handhabung eines Seils.

GB 2517756 A offenbart eine Winde für zusammengesetzte seismische Kabel.

WO 2014/026817 A1 offenbart eine Vorrichtung zum Aussetzen und Einholen eines Schleppsonas.

WO 2004/039666 A1 offenbart eine Ausbringvorrichtung für eine Schleppantenne.

Aufgabe der Erfindung ist es, den Stand der Technik zu verbessern.

Gelöst wird die Aufgabe durch eine Winde für eine Schleppantenne gemäß Patentanspruch 1.

Die Winde umfasst eine erste Trommel mit einer ersten Schleppantenne und mindestens eine zweite Trommel mit einer zweiten Schleppantenne. Die erste Trommel und die zweite Trommel sind drehbar in einem Rahmen gelagert, wobei der Rahmen einen Führungsschlitten aufweist. Die Winde weist eine Verbindungseinheit auf, um eine Verbindung des Endes der ersten Schleppantenne mit der zweiten Schleppantenne herzustellen. Die erste Trommel ist an der innenliegenden Flanke über Schrauben fest mit der innenliegenden Flanke der zweiten Trommel verbunden, wobei das Ende der ersten Schleppantenne über den Führungsschlitten geführt ist, sodass im Falle eines Wechsels von der ersten Trommel auf die zweite Trommel die erste Schleppantenne auf die zweite Schleppantenne überläuft oder im Falle eines Wechsels von der zweiten Trommel auf die erste Trommel die zweite Schleppantenne auf die erste Schleppantenne überläuft. Die Verbindungseinheit ist mittels einer Halterung an den verbundenen Flanken der ersten Trommel und der zweiten Trommel befestigt, wobei die Halterung ausgebildet ist, sich beim Überlaufen automatisch zu lösen und die Verbindungseinheit freizugeben.

Im Falle von zwei Trommeln mit jeweils einer Schleppantenne wird über die erste Verbindungseinheit eine längere Schleppantenne realisiert. Somit sind eine kleinere, angepasste Bauform der Trommeln und ein Verbringen einer längeren Schleppantenne mit nur einer Vorrichtung möglich.

Vor allem wird dadurch eine verlängerbare Schleppantenne bereitgestellt, welche vorteilhaft variable ausgeführt werden kann.

Ein wesentlicher Gedanke der Erfindung beruht darauf, dass über eine Verbindungseinheit an einem Ende der ersten Schleppantenne auf der ersten Trommel zum einem Ende der zweiten Schleppantenne auf der zweiten Trommel eine Gesamtschleppantenne gebildet wird, welche beim Wechsel von der ersten Trommel auf die zweite Trommel automatisch überläuft und abgewickelt wird. Beim Aufwickeln sind die Verhältnisse beim Wechsel von der zweiten Trommel auf die erste Trommel entsprechend umgekehrt.

### Folgendes Begriffliche sei erläutert:

Eine "Trommel" (auch Scheibenspule oder Kabeltrommel genannt) ist insbesondere eine Spule oder Rolle, auf welche oder welcher Material mit insbesondere rundem Querschnitt auf- und/oder abgerollt wird. Insbesondere weist die Spule oder die Rolle an den beiden äußeren Seiten Flanken auf, welche eine Ausbreitung des aufgerollten Materials begrenzen. Auf einer Trommel wird insbesondere eine Schleppantenne, ein Zugseil und/oder -kabel, ein Leitungskabel und/oder ein Schleppsonar aufgerollt oder abgerollt.

Eine "Schleppantenne" ist insbesondere eine lange Linienantenne, welche nach einem Zugkabel (oder Zugseil) hinter einem Schiff geschleppt wird. Insbesondere weist die Schleppantenne eine elastische, schlauchförmige Hülle auf, in welcher insbesondere mehrere Hydrophone angeordnet sind. Die schlauchförmige Hülle kann mit Gel oder Flüssigkeit gefüllt sein. Eine Schleppantenne ist insbesondere Bestandteil eines passiven Sonars und/oder der akustischen Empfangsteil eines aktiven Schleppsonars. Insbesondere wird die Schleppantenne in einer geeigneten Tiefe geschleppt und somit entfernt von Geräuschen des Schleppschiffes betrieben. Insbesondere umfasst die Schleppantenne auch ein verbundenes oder separates Zugkabel und/oder Zugseil.

Ein "Zugkabel" (auch Zugseil genannt) ist insbesondere ein Kabel oder Seil, welches durch Zug einen mechanischen Prozess in Gang setzt und/oder aufrechterhält. Insbesondere überträgt ein Zugkabel die Zugkraft eines Schiffes auf eine durch das Wasser zu ziehende Schleppantenne.

Ein "Antrieb" ist insbesondere eine konstruktive Einheit, welche mittels Energieumformung eine Trommel bewegt. Dazu weist insbesondere jede Trommel einen eigenen Antrieb auf oder ein Antrieb bewegt mehrere Trommeln. Durch den Antrieb der Trommel und die entsprechende Drehbewegung der Trommel ist insbesondere eine Schleppantenne auf- oder abwickelbar. Bei dem Antrieb handelt es sich insbesondere um einen mechanischen, elektrischen und/oder hydraulischen Antrieb.

Bei einer "Verbindungseinheit" handelt es sich insbesondere um eine Vorrichtung, welche zwei Schleppantennen verbindet. Insbesondere ist die Verbindungseinheit wasserdicht und/oder zugfest ausgelegt. Bei der Verbindungseinheit handelt es sich insbesondere um eine Steckverbindung. Die Verbindungseinheit ist insbesondere derart ausgebildet, dass bei einem Trommelwechsel die zuerst abgewickelte oder aufgewickelte Schleppantenne direkt auf die nächste Schleppantenne überläuft. Die Verbindung über die Verbindungseinheit erfolgt insbesondere manuell und/oder automatisch vor oder während des Trommelwechsels. Insbesondere weist die Verbindungseinheit eine elektrische und/oder optische und/oder mechanische Verbindung zwischen den Schleppantennen und/oder Schleppantennensegmenten auf, wodurch insbesondere eine Energieversorgung, eine Datenübertragung und/oder eine Übertragung von Steuersignalen zwischen den Schleppantennen und/oder den Schleppantennensegmenten sowie dem Schleppschiff ermöglicht werden. Insbesondere kann eine Verbindungseinheit auch eine Schleppantenne und/oder ein Schleppantennensegment mit einem Zugkabel oder zwei Zugkabel verbinden.

Unter "Überlaufen" wird insbesondere verstanden, dass eine erste Schleppantenne, welche auf einer ersten Trommel auf- oder abgewickelt wird, bei Erreichen des Endes dieser ersten Schleppantenne automatisch mittels der Verbindungseinheit auf eine nachfolgende zweite Schleppantenne wechselt, welche sich auf einer zweiten Trommel befindet, sodass diese zweite Schleppantenne nachfolgend ebenfalls auf- oder abgewickelt wird. Insbesondere erfolgt das Überlaufen automatisch und/oder ohne Unterbrechung des Auf- oder Abwicklungsvorganges.

In einer weiteren Ausführungsform der Trommel ist die erste Trommel mit der zweiten Trommel drehbar verbunden.

Somit werden die erste Trommel und die zweite Trommel mit demselben Antrieb in eine Drehbewegung versetzt. Dadurch, dass nur ein einziger Antrieb verwendet wird, wird Platz eingespart. Insbesondere ist ein geringerer Bauraum an oder unter Deck des Schleppschiffes erforderlich.

In einem weiteren Aspekt der Erfindung wird die Aufgabe gelöst durch eine Winde für eine Schleppantenne, wobei die Winde mindestens eine zuvor beschriebene Trommel aufweist.

Dadurch wird eine modulare Winde bereitgestellt, welche nachrüstbar und/oder adaptierbar ist. Insbesondere kann die Winde an die Anforderungen der Schleppantenne oder der Schleppantennen angepasst werden. Durch die Modularität ist die Winde auch einfacher transportierbar, kann somit zwischen Schiffen ausgetauscht werden und an den jeweiligen Schiffstyp in einfacher Weise angepasst werden.

In einer weiteren Ausführungsform der Winde, wobei die Winde die erste Trommel und die zweite Trommel aufweist, weist die Winde eine dritte Trommel mit einer dritten Schleppantenne und einer zweiten Verbindungseinheit und/oder eine vierte Trommel mit einer vierten Schleppantenne und einer dritten Verbindungseinheit und/oder weitere Trommeln mit weiteren Schleppantennen und weiteren Verbindungseinheiten auf, sodass alle verbundenen Schleppantennen nacheinander überlaufbar und abwickelbar oder aufwickelbar sind.

Somit wird eine Winde bereitgestellt, welche an die Schleppantenne oder die Schleppantennen und/oder an das Zugkabel und/oder an das Schiff anpassbar ist.

Dadurch, dass die Schleppantennen zwei oder mehreren Trommeln zugeordnet sind, können die Trommeln entsprechend der Anforderungen der Schleppantennen angepasst werden. Insbesondere kann dadurch vermieden werden, dass eine Schleppantenne einer zu starken Krümmung oder zu starken Quetschungen unterworfen ist.

Auch kann ein Zugkabel oder Zugseil und/oder ein Schleppkörper und/oder ein Endstück separat von einer Schleppantenne auf einer eigenen Trommel gelagert und auf- oder abgewickelt sowie verbunden werden.

Somit wird eine Winde bereitgestellt, welche optimal an die Schleppantenne und somit an die seismologischen Untersuchung und/oder dem Ortungsverfahren angepasst ist.

Durch die Verbindung von mehreren Schleppantennen jeweils über Verbindungseinheiten kann eine Gesamtschleppantenne mit entsprechend langer Länge bereitgestellt werden, welche ein Empfangen von Wasserschallsignalen auch mit tiefen Frequenzen erlaubt.

Durch die Verbindungseinheiten zwischen den Schleppantennen laufen diese automatisch auf die nächste Trommel beim Auf- oder Abwickeln über, sodass der Ausbring- oder Einholvorgang der gesamten Schleppantenne und/oder des Schleppsonars und/oder des Zugkabels nicht unterbrochen werden muss.

Dadurch, dass die Schleppantennen über Verbindungseinheiten verbunden sind, kann im Gefahrenfall und/oder wenn die Zeit zum Einholen nicht ausreicht, ein Steuerbefehl zum Lösen einer bestimmten Verbindungseinheit von der Plattform des Schleppschiffes abgegeben werden, sodass nicht alle Schleppantennen/-segmente sondern nur eine oder wenige Schleppantennen/-segmente verloren gehen.

Die "dritte" und "vierte Trommel" und die "weiteren Trommeln" entsprechen in ihrer Ausprägung der oben definierten Trommel.

Die "dritte Schleppantenne", die "vierte Schleppantenne" und die "weiteren Schleppantennen" entsprechen in ihrer Ausprägung der oben definierten Schleppantenne, wobei insbesondere die jeweils als nächstes auf- oder abzuwickelnde Schleppantenne die entsprechend nächste Verbindungseinheit aufweist.

Die "zweite Verbindungseinheit", die "dritte Verbindungseinheit" und die "weiteren Verbindungseinheiten" entsprechen in ihrer Ausprägung der oben beschriebenen Verbindungseinheit.

Damit im Falle von verbundenen Schleppantennen eine Übertragung von Steuersignalen und/oder Datensignalen und/oder eine Energieversorgung realisierbar ist oder sind, sind in einer Ausführungsform der Winde durch die Verbindungseinheit oder die Verbindungseinheiten die Schleppantennen elektrisch verbindbar.

Somit können die Hydrophone der Schleppantenne mit Strom versorgt werden, Steuersignale können von einer Plattform an Bord des Schleppschiffes zur Schleppantenne und/oder Datensignale aufgrund der empfangenen Wasserschallgeräusche der Hydrophone können an die Plattform des Schleppschiffes übertragen werden.

Neben einer elektrischen Verbindung oder anstelle einer elektrischen Verbindung können die Steuersignale und/oder Datensignale auch optisch, beispielsweise über einen Lichtwellenleiter, übertragen werden.

In einer weiteren Ausführungsform der Winde weist die Verbindungseinheit oder weisen die Verbindungseinheiten eine zugfeste Steckverbindung auf.

Dadurch wird sichergestellt, dass die Verbindungseinheit nicht unter der Zugbelastung beim Auf- und Abwickeln der Schleppantennen und/oder beim Schleppen der Schleppantennen im Wasser reißt.

Zudem kann durch eine zugfeste Steckverbindung ein schneller und zugbeständiger Formschluss der Steckerteile erfolgen, wobei dieser bevorzugt automatisch in der Winde beim Verbinden weiterer Trommeln und weiterer Schleppantennen erfolgt.

Durch eine zugfeste Ausführung der Steckverbindung ist eine weitere Sicherung gegen unbeabsichtigtes Lösen nicht erforderlich.

Unter "zugfest" wird insbesondere verstanden, dass die Verbindungseinheit die maximale mechanische Zugspannung, welche die Verbindungseinheit aushält, bevor sie reißt, nicht erlangt.

Eine "Steckverbindung" dient insbesondere zum Trennen und Verbinden von Schleppantennen und/oder Schleppantennensegmenten und/oder eines Zugkabels. Bei der Steckverbindung werden insbesondere die Steckerteile durch Formschluss passend ausgerichtet und durch Federkraft schließlich lösbar fixiert, wobei die Steckverbindung insbesondere zugfest ausgelegt ist.

Um unterschiedliche Schleppantennen ausbringen und einholen zu können, weisen in einer weiteren Ausführungsform der Winde die Schleppantennen unterschiedliche Durchmesser auf.

Somit können Trommeln mit den Schleppantennendurchmessern angepassten Trommeldurchmessern gleichzeitig verwendet und den verschiedenen minimal zulässigen Krümmungsradien der Schleppantennen angepasst werden.

Zudem kann entsprechend den unterschiedlichen Durchmessern der Schleppantennen und/oder des Zugkabels jeweils verschiedene Lagen der Schleppantenne und/oder des Zugnabels auf jeweils eine Trommel aufgebracht werden.

Der "Durchmesser" einer Schleppantenne ist insbesondere die längste Sehne senkrecht zur Längsachse der Schleppantenne.

Damit die verbundenen Schleppantennen mit einer konstanten Geschwindigkeit nacheinander abwickelbar oder aufwickelbar sind, ist in einer weiteren Ausführungsform der Winde der Antrieb automatisch anpassbar.

Dadurch, dass der Antrieb die Geschwindigkeit der Drehbewegungen der Trommeln automatisch anpasst, können auch Schleppantennen und/oder Zugkabel mit unterschiedlichen Durchmessern mit konstanter Geschwindigkeit ab- oder aufgewickelt werden.

Zudem kann, falls dieses erforderlich ist, die Geschwindigkeit auch durch den Antrieb herab- oder heraufgesetzt werden. Insbesondere kann durch den automatisch anpassbaren Antrieb auf Gefahrensituationen schnell reagiert werden, wenn beispielsweise aufgrund einer drohenden Kollision die Schleppantenne oder die verbundenen Schleppantennen schnell eingeholt werden müssen.

In einem weiteren Aspekt der Erfindung wird die Aufgabe gelöst durch eine Schleppantenne zum Schleppen im Wasser, wobei die Schleppantenne mindestens ein erstes Schleppantennensegment und eine erste zuvor beschriebene Trommel und/oder eine zuvor beschriebene Winde aufweist.

Dadurch wird eine Schleppantenne bereitgestellt, die auf einer ersten Trommel auf- und abgewickelt werden kann, wobei die erste Trommel an die Schleppantenne angepasst ist. Ebenso wird eine Winde zum Ausbringen und Einholen einer Schleppantenne verwendet, welche an die spezielle Schleppantenne angepasst ist.

Durch die angepasste Trommel und/oder Winde wird vermieden, dass die empfindliche Schleppantenne als akustisches Empfangsteil beim Ausbringen oder Einholen beschädigt wird.

Ein "Schleppantennensegment" ist insbesondere ein Abschnitt einer oben definierten Schleppantenne. Das Schleppantennensegment weist insbesondere den gleichen Durchmesser und die gleiche Länge des vorherigen und/oder des nachfolgenden Schleppantennensegmentes auf oder das Schleppantennensegment weist einen unterschiedlichen Durchmesser und/oder eine unterschiedliche Länge zum vorhergehenden oder nachfolgenden Schleppantennensegment auf. Das Schleppantennensegment ist insbesondere mit einem vorhergehenden und/oder nachfolgenden Schleppantennensegment über eine Verbindungseinheit verbunden. Bei einem Schleppantennensegment kann es sich insbesondere auch um ein Zugkabel handeln.

Um eine den Anforderungen entsprechende Schleppantenne bereitzustellen, ist oder sind das mindestens erste Schleppantennensegment der ersten Trommel und/oder ein zweites Schleppantennensegment der zweiten Trommel und/oder ein drittes Schleppantennensegment der dritten Trommel und/oder ein viertes Schleppantennensegment der vierten Trommel und/oder weitere Schleppantennensegmente weiteren Trommeln zugeordnet, sodass im Fall einer Verbindung durch die Verbindungseinheit oder die Verbindungseinheiten die verbundenen Schleppantennen und/oder Zugkabel nacheinander überlaufen und abwickelbar oder aufwickelbar sind.

Dadurch wird eine segmentierbare und adaptierbare Schleppantenne bereitgestellt, welche an die seismologische Untersuchung und/oder das Ortungsverfahren und/oder den vorhandenen Trommeln an Bord und/oder der Winde an Bord eines Schleppschiffes angepasst werden kann.

Zudem wird ein manuelles oder ein automatisches An- und Abkoppeln von Schleppantennensegmenten ermöglicht, sodass eine gezielte Länge der Schleppantenne und/oder des Zugkabels eingestellt werden kann.

Insbesondere kann durch eine Vielzahl von verbundenen Schleppantennensegmenten eine sehr lange Gesamtschleppantenne bereitgestellt werden, welche ein Empfangen von tieferen Frequenzen ermöglicht.

Des Weiteren kann durch Verbinden mit einem Schleppkörper als akustisches Sendeteil ein aktives Schleppsonar bereitgestellt werden.

In einem zusätzlichen Aspekt der Erfindung wird die Aufgabe gelöst durch ein Schiff zum Schleppen einer Schleppantenne im Wasser, wobei das Schiff eine erste Trommel wie zuvor beschrieben und/oder eine Winde wie zuvor beschrieben und/oder eine Schleppantenne wie zuvor beschrieben aufweist, sodass die erste Trommel und/oder die Winde und/oder die Schleppantenne an das Schiff adaptierbar ist oder sind.

Dadurch kann ein Schiff bereitgestellt werden, bei dem die Schleppantenne und/oder die Winde als Ausbring- und Einholvorrichtung und/oder die Trommeln an das Schiff angepasst werden können, insbesondere an die Geschwindigkeit und den vorhandenen Bauraum des Schiffes.

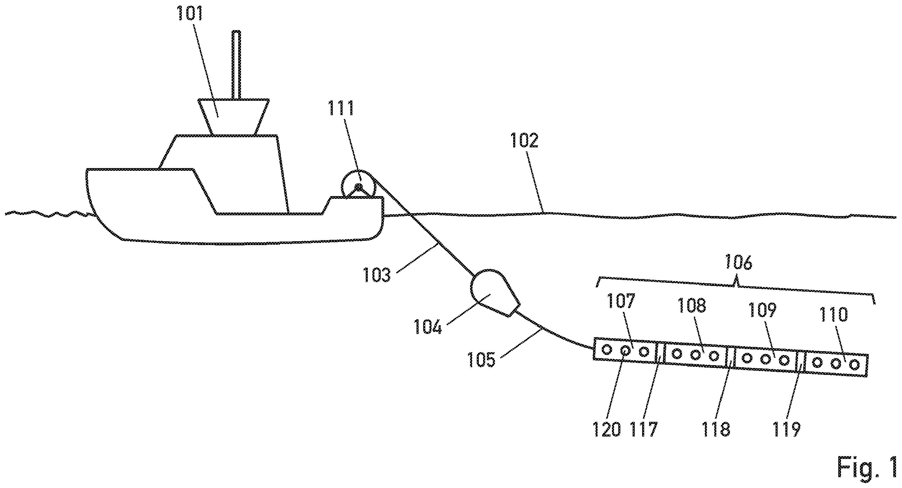

Im Weiteren wird die Erfindung anhand von Ausführungsbeispielen näher erläutert. Es zeigen
- Figur 1: eine stark schematische Schnittdarstellung eines Schleppschiffes, einer Winde und einer Schleppantenne und
- Figur 2: ein stark schematischer Längsschnitt durch eine Winde mit zwei Trommeln und zwei Schleppantennen mit einem Verbindungsstecker.

Ein Schleppschiff 101 fährt auf der Wasseroberfläche 102 der Nordsee. Am Heck des Schleppschiffes 101 ist eine Winde 111 installiert. An der Winde 111 hängt ein Zugkabel 103, welches im Wasser mit einem Schleppkörper 104 verbunden ist. An dem Schleppkörper 104 ist das Ende eines weiteren Zugkabels 105 verbunden. Das andere Ende des Zugkabels 105 ist mit dem vierten Schleppantennensegment 107 einer Schleppantenne 106 verbunden. Das vierte Schleppantennensegment 107 ist über den dritten Verbindungsstecker 117 mit dem dritten Schleppantennensegment 108 verbunden. Das dritte Schleppantennensegment 108 ist über den zweiten Verbindungsstecker 118 mit dem zweiten Schleppantennensegment 109 verbunden. Das zweite Schleppantennensegment 109 ist über den ersten Verbindungsstecker 119 mit dem ersten Schleppantennensegment 110 verbunden.

Die Schleppantennensegmente 107, 108, 109 und 110 bilden mit den Verbindungssteckern 117, 118 und 119 die Schleppantenne 106 aus. Die Schleppantennensegmente 107, 108, 109 und 110 weisen jeweils Hydrophone 120 und jeweils eine Länge von 125m auf.

Die Winde 111 weist sechs Trommeln auf. Den ersten vier Trommeln sind jeweils die Schleppantennensegmente 107, 108, 109 und 110 zugeordnet. Der fünften Trommel ist das Zugkabel 105 zugeordnet und der sechsten Trommel ist das Zugkabel 103 zusammen mit dem Schleppkörper 104 zugeordnet.

Zum Ausbringen der Schleppantenne 106 ins Wasser mittels der Winde 111 wird zunächst das erste Schleppantennensegment 110 von der ersten Trommel abgewickelt und bei Erreichen eines verbundenen Endes des ersten Schleppantennensegmentes 110 durch den ersten Verbindungsstecker 119 erfolgt ein Überlaufen auf das zweite Schleppantennensegment 109 und somit ein Wechsel von der ersten Trommel auf die zweite Trommel. Nach Abwickeln des zweiten Schleppantennensegmentes 109 erfolgt wiederum durch den zweiten Verbindungsstecker 118 ein Überlaufen vom zweiten Schleppantennensegment 109 auf das dritte Schleppantennensegment 108 und somit ein Wechsel von der zweiten Trommel auf die dritte Trommel.

Nachdem das dritte Schleppantennensegment 108 vollständig abgewickelt ist, erfolgt durch den dritten Verbindungsstecker 117 ein automatisches Überlaufen vom dritten Schleppantennensegment 108 auf das vierte Schleppantennensegment 107 und somit ein Wechsel von der dritten Trommel auf die vierte Trommel.

Über die Winde 111 ist das vierte Schleppantennensegment automatisch mit dem Zugkabel 105 auf der fünften Trommel verbunden, welches anschließend abgewickelt wird. Ebenso ist das Zugkabel 105 bereits automatisch über die Winde 111 mit dem Schleppkörper 104 und dem daran verbundenen Zugkabel 103 verbunden, welche anschließend über die Drehbewegung der sechsten Trommel abgewickelt werden.

Somit ist eine Schleppantenne 106 mit vier Schleppantennensegmenten 107, 108, 109 und 110 über eine angepasste Winde 111 ohne Beschädigung ins Wasser ausgebracht worden und wird optimal durchs Wasser geschleppt.

Die Zugkabel 103 und 105 weisen eine Gesamtlänge von 500m auf. Die segmentierte Schleppantenne 106 mit einer Länge von 100m empfängt auch tiefe Frequenzen von 50Hz.

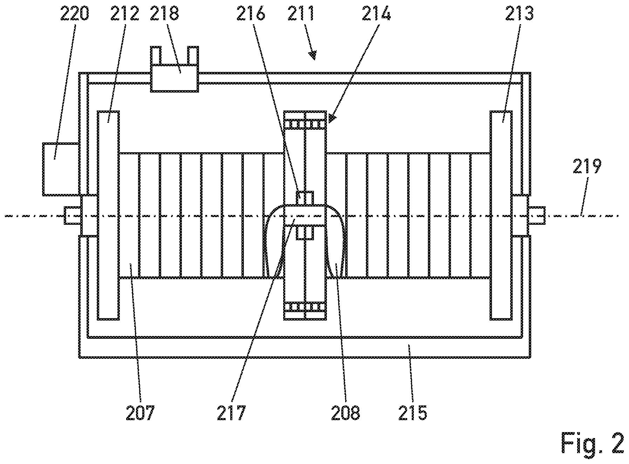

Eine Winde 211 für zwei Schleppantennensegmente (siehe Fig. 2) weist eine erste Trommel 212 auf. Die erste Trommel 212 ist an der innenliegenden Flanke über Schrauben 214 fest mit der innenliegenden Flanke einer zweiten Trommel 213 verbunden. Auf der ersten Trommel 212 ist die erste Schleppantenne 207 und auf der zweiten Trommel 213 ist die zweite Schleppantenne 208 gelagert. Die erste Trommel 212 und die zweite Trommel 213 sind in einem stationären Rahmen 215 drehbar gelagert.

An dem Rahmen 215 ist ein Motor 220 befestigt, über welchen die erste Trommel 212 und die zweite Trommel 213 um die Drehachse 219 drehbar sind. Das Ende der ersten Schleppantenne 207 ist über einen Verbindungsstecker 217 mit der zweiten Schleppantenne 208 verbunden. Der Verbindungsstecker 217 ist mittels einer Halterung 216 an den verbundenen Flanken der ersten Trommel 212 und der zweiten Trommel 213 befestigt. Der Rahmen 215 weist einen Führungsschlitten 218 auf.

Zum Abwickeln der ersten Schleppantenne 207 wird das erste Ende der Schleppantenne 207 über den Führungsschlitten 218 geführt. Der Motor 220 wird gestartet und bei einer konstanten Geschwindigkeit werden die erste Trommel 212 mit der drehbar verbundenen zweiten Trommel 213 gedreht, sodass die erste Schleppantenne 207 abgewickelt und ins Wasser ausgebracht wird. Wenn die erste Schleppantenne 207 vollständig abgewickelt ist, läuft die erste Schleppantenne 207 durch den Verbindungsstecker 217 auf die zweite Schleppantenne 208 über und die zweite Schleppantenne 208 auf der zweiten Trommel 213 wird abgewickelt. Beim Überlaufen löst sich automatisch die Halterung 216 und gibt den Verbindungsstecker 217 frei. Sobald die zweite Schleppantenne 208 abgewickelt ist, wird das nicht gezeigte Zugkabel auf einer nicht gezeigten zweiten Winde abgewickelt, bis die Schleppantennen 207 und 208 vollständig im Wasser ausgebracht sind.

### Bezugszeichenliste

- 101: Schleppschiff
- 102: Wasseroberfläche
- 103: Zugkabel
- 104: Schleppkörper
- 105: Zugkabel
- 106: Schleppantenne
- 107: viertes Schleppantennensegment
- 108: drittes Schleppantennensegment
- 109: zweites Schleppantennensegment
- 110: erstes Schleppantennensegment
- 111: Winde
- 117: dritter Verbindungsstecker
- 118: zweiter Verbindungsstecker
- 119: erster Verbindungsstecker
- 120: Hydrophone
- 207: erste Schleppantenne
- 208: zweite Schleppantenne
- 211: Winde
- 212: erste Trommel
- 213: zweite Trommel
- 214: Schrauben
- 215: Rahmen
- 216: Halterung
- 217: Verbindungsstecker
- 218: Führungsschlitten
- 219: Drehachse
- 220: Motor

## Patentansprüche

1. Winde (212) für Schleppantennen (106, 207, 208) umfassend eine erste Trommel mit einer ersten Schleppantenne (207) und mindestens eine zweite Trommel (213) mit einer zweiten Schleppantenne (208), wobei die erste Trommel und die zweite Trommel drehbar in einem Rahmen gelagert sind, wobei der Rahmen einen Führungsschlitten aufweist, wobei die Winde eine Verbindungseinheit (119, 217) aufweist, um eine Verbindung des Endes der ersten Schleppantenne mit der zweiten Schleppantenne herzustellen, **dadurch gekennzeichnet, dass** die erste Trommel an der innenliegenden Flanke über Schrauben fest mit der innenliegenden Flanke der zweiten Trommel verbunden ist, wobei das Ende der ersten Schleppantenne über den Führungsschlitten geführt ist, sodass im Falle eines Wechsels von der ersten Trommel auf die zweite Trommel die erste Schleppantenne auf die zweite Schleppantenne überläuft oder im Falle eines Wechsels von der zweiten Trommel auf die erste Trommel die zweite Schleppantenne auf die erste Schleppantenne überläuft, wobei die Verbindungseinheit mittels einer Halterung an den verbundenen Flanken der ersten Trommel und der zweiten Trommel befestigt ist, wobei die Halterung ausgebildet ist, sich beim Überlaufen automatisch zu lösen und die Verbindungseinheit freizugeben.

2. Winde nach Anspruch 1, **dadurch gekennzeichnet, dass** die erste Trommel mit der zweiten Trommel drehbar verbunden ist.

3. Winde nach einem der vorherigen Ansprüche, wobei die Verbindungseinheit ausgebildet ist, die erste und die zweite Schleppantenne elektrisch zu verbinden, um eine Übertragung von Steuersignalen und/oder Datensignalen und/oder eine Energieversorgung zu realisieren.

4. Winde nach einem der vorherigen Ansprüche, wobei die Verbindungseinheit eine zugfeste Steckverbindung (217) aufweist.

5. Winde nach einem der vorherigen Ansprüche, wobei die erste und die zweite Schleppantenne unterschiedliche Durchmesser aufweisen.

6. Winde nach einem der vorherigen Ansprüche, wobei der Antrieb ausgebildet ist, die Geschwindigkeit der Drehbewegung der ersten und der zweiten Trommel automatisch anzupassen.

7. Winde nach einem der vorherigen Ansprüche, wobei die Verbindungseinheit ausgebildet ist, die erste und die zweite Schleppantenne optisch zu verbinden, um eine Übertragung von Steuersignalen und/oder Datensignalen zu realisieren.

## Claims

1. A winch (212) for towed antennas (106, 207, 208) comprising a first drum with a first towed antenna (207) and at least one second drum (213) with a second towed antenna (208), the first drum and the second drum being rotatably mounted in a frame, the frame having a guide carriage, wherein the winch comprises a connecting unit (119, 217) for connecting the end of the first towed antenna to the second towed antenna, **characterised in that** the first drum is firmly connected to the inner flank of the second drum via screws, wherein the end of the first towed antenna is guided over the guide carriage so that, in the event of a change from the first drum to the second drum, the first towed antenna passes over to the second towed antenna or, in the event of a change from the second drum to the first drum, the second towed antenna passes over to the first towed antenna, wherein the connecting unit is attached to the connected flanks of the first drum and the second drum by means of a holder, wherein the holder is designed to release automatically in the event of overrunning and to release the connecting unit.

2. Winch according to claim 1, **characterised in that** the first drum is rotatably connected to the second drum.

3. Winch according to one of the preceding claims, wherein the connection unit is designed to electrically connect the first and the second towed antenna in order to realise a transmission of control signals and/or data signals and/or a power supply.

4. Winch according to one of the preceding claims, wherein the connection unit has a tension-resistant plug connection (217).

5. Winch according to one of the preceding claims, wherein the first and the second towed antenna have different diameters.

6. Winch according to one of the previous claims, wherein the drive is designed to automatically adjust the speed of the rotary movement of the first and second drums.

7. Winch according to one of the previous claims, wherein the connection unit is designed to optically connect the first and second towed antenna in order to realise a transmission of control signals and/or data signals.

## Revendications

1. Treuil (212) pour antennes traînantes (106, 207, 208) comprenant un premier tambour avec une première antenne traînante (207) et au moins un deuxième tambour (213) avec une deuxième antenne traînante (208), le premier tambour et le deuxième tambour étant montés à rotation dans un cadre, le cadre comprenant un chariot de guidage, le treuil comprenant une unité de connexion (119, 217) pour réaliser une connexion de l'extrémité de la première antenne traînante à la seconde antenne traînante, le premier tambour étant connecté de manière fixe au niveau du flanc intérieur au flanc intérieur du second tambour par des vis, l'extrémité de la première antenne traînante étant guidée par le chariot de guidage, de sorte qu'en cas de passage du premier tambour au deuxième tambour, la première antenne traînante déborde sur la deuxième antenne traînante ou qu'en cas de passage du deuxième tambour au premier tambour, la deuxième antenne traînante déborde sur la première antenne traînante, l'unité de liaison étant fixée au moyen d'un support sur les flancs reliés du premier tambour et du deuxième tambour, le support étant configuré pour se libérer automatiquement en cas de débordement et pour libérer l'unité de liaison.

2. Treuil selon la revendication 1, **caractérisé en ce que** le premier tambour est relié de manière rotative au deuxième tambour.

3. Treuil selon l'une quelconque des revendications précédentes, dans lequel l'unité de connexion est configurée pour relier électriquement la première et la deuxième antennes traînantes afin de réaliser une transmission de signaux de commande et/ou de signaux de données et/ou une alimentation en énergie.

4. Treuil selon l'une quelconque des revendications précédentes, dans lequel l'unité de connexion comprend un connecteur (217) résistant à la traction.

5. Treuil selon l'une quelconque des revendications précédentes, dans lequel la première et la deuxième antenne remorquée présentent des diamètres différents.

6. Treuil selon l'une des revendications précédentes, dans lequel l'entraînement est configuré pour adapter automatiquement la vitesse de rotation du premier et du deuxième tambour.

7. Treuil selon l'une des revendications précédentes, dans lequel l'unité de connexion est configurée pour relier optiquement la première et la deuxième antenne traînante afin de réaliser une transmission de signaux de commande et/ou de signaux de données.
